# EUROPÄISCHE PATENTSCHRIFT

(11) **EP 3 635 023 B1**
(45) Veröffentlichungstag und Bekanntmachung des Hinweises auf die Patenterteilung: **31.03.2021**
(21) Anmeldenummer: 18728189.4
(22) Anmeldetag: 07.06.2018
(51) Int. Cl.: C08G 18/48, C08G 18/76, C08G 65/34, C08K 7/02

(54) **VERFAHREN ZUR HERSTELLUNG VON FASERVERBUNDMATERIAL UNTER EINSATZ VON HYBRIDPOLYOL**
METHOD FOR PRODUCING FIBRE COMPOSITE MATERIAL USING HYBRID POLYOL
PROCÉDÉ DE FABRICATION DE MATÉRIAU COMPOSITE FIBREUX À L'AIDE DE POLYOLE HYBRIDE

(30) Priorität: 07.06.2017 EP 17174693
(43) Veröffentlichungstag der Anmeldung: 15.04.2020
(73) Patentinhaber: BASF SE, 67056 Ludwigshafen am Rhein (DE)
(72) Erfinder: EMGE, Andreas, 49448 Lemfoerde (DE); ZARBAKHSH, Sirus, 67056 Ludwigshafen (DE); ELING, Berend, 49448 Lemfoerde (DE); MEYER, Andre, 49448 Lemfoerde (DE)
(74) Vertreter: BASF IP Association
(86) Internationale Anmeldenummer: PCT/EP2018/065010
(87) Internationale Veröffentlichungsnummer: WO 2018/224592

(56) Entgegenhaltungen:
- EP-A1- 2 818 528
- WO-A1-03/085022
- DE-A1- 19 812 174

## Beschreibung

Die vorliegende Erfindung betrifft ein Verfahren zur Herstellung von Faserverbundwerkstoffen, bei dem man eine Isocyanatkomponente A und eine Polyolkomponente B zu einer Reaktionsmischung vermischt, Fasern mit der Reaktionsmischung imprägniert und die imprägnierten Fasern aushärtet, wobei die Polyolkomponente B das Alkoxylierungsprodukt einer Mischung enthaltend mindestens einen fettbasierten Alkohol (i) und mindestens eine OH-funktionelle Verbindung mit aliphatisch gebundenen OH-Gruppen und einer OH-Funktionalität von 2 bis 4, die kein fettbasierter Alkohol ist, (ii), enthält. Weiter betrifft die vorliegende Erfindung ein Faserverbundmaterial, erhältlich nach einem solchen Verfahren und die Verwendung des Faserverbundmaterials als Mast oder Rohr.

Polyurethanfaserverbundmaterialien sind bekannt und umfassen beispielsweise Materialien, die durch Vakuuminfusion, Faserwickelverfahren, sogenanntem "Filament Winding" oder Pultrusion hergestellt werden. In diesen Anwendungen wird das Fasermaterial mit einer Polyurethanreaktionsmischung benetzt, beispielsweise in einem Imprägnierbad oder einer Imprägnierbox. Anschließend wird das imprägnierte Fasermaterial in Form gebracht und ausgehärtet, beispielsweise in einem Ofen. Die so erhaltenen Faserverbundmaterialien zeichnen sich durch ein relativ geringes Materialgewicht bei hoher Härte und Steifigkeit, einer hohen Korrosionsbeständigkeit und einer guten Verarbeitbarkeit aus. Polyurethan-Faserverbundmaterialien werden beispielsweise als Karrosserieaußenteile im Fahrzeugbau, als Bootsrümpfe, Masten, beispielsweise als Strommasten oder Telegraphenmasten, Rohre oder Rotorblätter für Windkraftanlagen eingesetzt.

Dieses Verfahren ist für Polyurethanbasierte Harze sehr anspruchsvoll, da, sobald das Fasermaterial die endgültige Form angenommen hat, eine schnelle Aushärtung gewährleistet werden muss, während eine lange offene Zeit der Reaktionsmischung erforderlich ist, um ein Zusetzen der Imprägniereinheit zu verhindern. Die Fasern werden dabei in einem offenen Bad oder einer geschlossenen Imprägniereinheit mit der Polyurethanreaktionsmischung benetzt. Neben einer langen offenen Zeit ist für eine optimale Benetzung der Fasern eine geringe Viskosität der Reaktionsmischung und eine gute Faserverträglichkeit erforderlich. Weiter sollte das hergestellte Faserverbundmaterial sehr gute mechanische Eigenschaften, wie einen hohen Elastizitätsmodulus, eine hohe Biegefestigkeit eine hohe Zugfestigkeit und eine hohe Glastemperatur aufweisen.

Bekannte Polyurethansysteme zur Herstellung von Faserverbundmaterialien sind beispielsweise beschrieben in WO03085022 und WO00/29459.

Ebenfalls ist die Herstellung von Polyurthanklebstoffen auf Basis von Hybridpolyolen beschrieben. So offenbart WO 2014/206779 die Herstellung einen Polyurethanklebstoff der durch Reaktion von Isocyanat mit einer Polyolkomponente erhalten wird, die ein Hybridpolyol enthält. Dieses Hybridpolyol wird hergestellt durch Alkoxylierung einer Mischung aus Ricinusöl, Bisphenol A, und Zucker. WO 2014/206779 beschreibt, dass die so erhaltenen Polyurethanklebstoffe gegenüber solchen, die ausgehend von einer Polyolmischung aus den Polyolen, die durch Alkoxylierung der Einzelkomponeten erhalten wurden, hergestellt wird, verbesserte mechanische Eigenschaften zeigen. Diese Hybridpolyole weisen aber Viskositäten von ca. 2000 bis 8000 mPas auf, was eine schnelle und vollständige Benetzung von Fasermaterial nicht ermöglicht und damit den Einsatz dieser Hybridpolyole bei der Herstellung von Faserverbundmaterialien ausschließt.

Aufgabe der vorliegenden Erfindung war es daher ein Verfahren zur Herstellung von Faserverbundmaterial auf Basis einer Polyurethanreaktionsmischung zu liefern, wobei die Polyurethanreaktionsmischung eine lange offene Zeit und eine niedrige Viskosität aufweist, so dass das Fasermaterial optimal imprägniert werden kann und andererseits schnell zu einem Faserverbundmaterial mit hervorragenden mechanischen Eigenschaften aushärtet.

Diese Aufgabe wurde überraschenderweise gelöst durch ein Verfahren zur Herstellung von Faserverbundwerkstoffen, bei dem man eine Isocyanatkomponente A und eine Polyolkomponente B zu einer Reaktionsmischung vermischt, Fasern mit der Reaktionsmischung imprägniert und die imprägnierten Fasern aushärtet, wobei die Polyolkomponente B das Alkoxylierungsprodukt einer Mischung, enthaltend mindestens einen fettbasierten Alkohol (i) und mindestens eine OH-funktionelle Verbindung mit aliphatisch gebundenen OH-Gruppen und einer OH-Funktionalität von 2 bis 4, die kein fettbasierter Alkohol ist, (ii), enthält.

Unter OH-Funktionalität ist dabei im Rahmen der vorliegenden Erfindung die Zahl an alkoholischen, acylierbaren OH-Gruppen pro Molekül zu verstehen. Falls die betreffende Komponente aus einer Verbindung mit definierter Molekularstruktur besteht, ergibt sich die Funktionalität aus der Zahl der OH-Gruppen pro Molekül. Wird eine Verbindung durch Ethoxylierung oder Propoxylierung eines Startermoleküls hergestellt, ergibt sich die OH-Funktionalität aus der Anzahl der reaktiven funktionellen Gruppen, beispielsweise OH-Gruppen, pro Startermolekül.

Die Polyisocyanatkomponente A enthält mindestens ein Diisocyanat oder Polyisocyanat. Diese umfassen alle zur Herstellung von Polyurethanen bekannten aliphatischen, cycloaliphatischen und aromatischen zwei- oder mehrwertigen Isocyanate sowie beliebige Mischungen daraus. Beispiele sind 4,4'-Methandiphenyldiisocyanat, 2,4'-Methandiphenyldiisocyanat, die Mischungen aus monomeren Methandiphenyldiisocyanaten und höherkernigen Homologen des Methandiphenyldiisocyanats (Polyphenylenpolymethylenpolyisocyanat), Tetramethylendiisocyanat, Hexamethylendiisocyanat (HDI), die Mischungen aus Hexamethylendiisocyanaten und höherkernigen Homologen des Hexamethylendiisocyanats (Mehrkern-HDI), Isophorondiisocyanat (IPDI), 2,4- oder 2,6-Toluylendiisocyanat (TDI) oder Mischungen der genannten Isocyanate. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten. Diese Mischungen sind auch als Polymer-MDI bekannt. Die Isocyanate können auch modifiziert sein, beispielsweise durch Einbau von Uretdion-, Carbamat-, Isocyanurat-, Carbodiimid-, Allophanat- und insbesondere Urethangruppen.

Dabei können als Di- und Polyisocyanate auch isocyanatgruppenhaltige Isocyanatprepolymere eingesetzt werden. Diese Polyisocyanatprepolymere sind erhältlich, indem vorstehend beschriebene Di- und Polyisocyanate, beispielsweise bei Temperaturen von 30 bis 100 °C, bevorzugt bei etwa 80 °C, mit Polyolen zum Prepolymer umgesetzt werden. Vorzugsweise wird zur Herstellung der erfindungsgemäßen Prepolymere 4,4'-MDI zusammen mit uretoniminmodifiziertem MDI und handelsüblichen Polyolen auf Basis von Polyestern, beispielsweise ausgehend von Adipinsäure, oder Polyethern, beispielsweise ausgehend von Ethylenoxid und/oder Propylenoxid, verwendet.

Polyole, die zur Herstellung von Isocyanatprepolymeren eingesetzt werden können, sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole zur Herstellung von Isocyanatprepolymeren Polyole eingesetzt, die auch unter der Polyolkomponente B beschrieben werden. Insbesondere werden in der Polyisocyanatkomponente A keine Polyisocyanatprepolymere eingesetzt.

Besonders bevorzugt werden als Di und Polyisocyanate Mischungen aus Diphenylmethandiisocyanat und Polyphenylenpolymethylenpolyisocyanaten eingesetzt.

Die Polyolkomponente B enthält das Alkoxylierungsprodukt einer Mischung aus fettbasiertem Alkohol (i) und einer OH-funktionellen Verbindung mit aliphatisch gebundenen OH-Gruppen und einer OH-Funktionalität von 2 bis 4 (ii).Die Alkoxylierung erfolgt dabei vorzugsweise indem die Mischung, enthaltend mindestens einen fettbasierten Alkohol (i) und mindestens eine OH-funktionellen Verbindung mit aliphatisch gebundenen OH-Gruppen und einer OH-Funktionalität von 2 bis 4 (ii) mit Hilfe eines nucleophilen und/oder basischen Katalysators und mindestens einem Alkylenoxid umgesetzt wird. Dabei wird vorzugsweise die Mischung der Komponenten (i) und (ii) vor Zugabe des Alkylenoxids in einem Reaktionsgefäß vorgelegt. Als Alkylenoxyd können beispielsweise 1,2-Butylenoxid, Propylenoxid oder Ethylenoxid eingesetzt werden. Dabei enthält das Alkylenoxid vorzugsweise Propylenoxid, besonders bevorzugt besteht das Alkylenoxyd aus Propylenoxid.

Der basische und/oder nucleophile Katalysator kann ausgewählt sein aus der Gruppe Alkalimetall- oder Erdalkalimetallhydroxide, Alkalimetall- oder Erdalkalimetallalkoxide, tertiäre Amine, N-heterocyclische Carbene.

Bevorzugt ist der basische und/oder nucleophile Katalysator ausgewählt ist aus der Gruppe enthaltend tertiäre Amine.

Besonders bevorzugt ist der basische und/oder nucleophile Katalysator ausgewählt aus der Gruppe enthaltend Imidazol und Imidazolderivate, ganz besonders bevorzugt Imidazol.

In einer anderen bevorzugten Ausführungsform ist der basische und/oder nucleophile Katalysator ausgewählt aus der Gruppe enthaltend N-heterocyclische Carbene, besonders bevorzugt aus der Gruppe enthaltend N-heterozyklische Carbene auf Basis N-alkyl- und N-arylsubstituierter Imidazolylidene.

In einer bevorzugten Ausführungsform ist der basische und/oder nucleophile Katalysator ausgewählt aus der Gruppe umfassend Trimethylamin, Triethylamin, Tripropylamin, Tributylamin, N,N'-Dimethylethanolamin, N,N'-Dimethylcyclohexylamin, Dimethylethylamin, Dimethylbutylamin, N,N'-Dimethylanilin, 4-Dimethylaminopyridin, N,N'-Dimethylbenzylamin, Pyridin, Imidazol, N-Methylimidazol, 2-Methylimidazol, 1,2 Dimethylimidazol, N-(3-Aminopropyl)imidazol), 4-Methylimidazol, 5-Methylimidazol, 2-Ethyl-4-methylimidazol, 2,4-Dimethylimidazol, 1-Hydroxypropylimidazol, 2,4,5-Trimethylimidazol, 2-ethylimidazol, 2-Ethyl-4-methylimidazol, N-Phenylimidazol, 2-Phenylimidazol, 4-Phenylimidazol, Guanidin, alkylierte Guanidine, 1,1,3,3-Tetramethylguanidin, Piperazin, alkyliertem Piperazine, Piperidin, alkyliertem Pipiridin, 7-Methyl-1,5,7-triazabicyclo[4.4.0]dec-5-en, 1,5-Diazobicylco[4.3.0]-non-5-en, 1,5-Diazabicylo[5.4.0]undec-7-en, bevorzugt Imidazol und Dimethylethanolamin (DMEOA).

Die genannten Katalysatoren können allein oder in beliebigen Mischungen zueinander eingesetzt werden.

Die Umsetzung mit Alkylenoxid erfolgt üblicherweise bei Temperaturen im Bereich zwischen 80 und 200°C, vorzugsweise zwischen 100°C und 160°C, besonders bevorzugt zwischen 110°C und 140°C.

Wenn tertiäre Amine und/ oder N-heterozyklische Carbene als Katalysatoren für die Umsetzung mit Alkylenoxiden verwendet werden, liegt die Katalysatorkonzentration bezogen auf die Masse der Verbindungen (i) und (ii) zwischen 50 - 5000 ppm, bevorzugt zwischen 100 und 1000 ppm, und der Katalysator muss nach der Umsetzung nicht aus dem Reaktionsprodukt entfernt werden.

Als fettbasierten Alkohol (i) geeignet sind vorzugsweise solche mit einer Hydroxylzahl von größer 100 bis kleiner 500 mg KOH/g, besonders bevorzugt 100 bis 300 mg KOH/g und insbesondere 100 bis 200 mg KOH/g, und einer OH-Funktionalität von mindestens 1. Die OH-Funktionalität der fettbasierten Alkohole liegt bevorzugt im Bereich von 2 bis 3. Besonders bevorzugt liegt die OH-Funktionalität der fettbasierten Alkohole bei 2,3 bis 3 und ganz besonders bevorzugt bei 2,6 bis 3.

Ein fettbasierter Alkohol (i) kann ein Fett, ein Öl, d. h. ein bei Raumtemperatur flüssiges Fett, eine Fettsäure oder aus den vorgenannten Verbindungen durch physikalische oder chemische Modifikation erhaltene Verbindung sein. Dabei handelt es sich im Rahmen der Erfindung bei aliphatischen Monocarbonsäuren mit mehr als 7 Kohlenstoffatomen um Fettsäuren. Fettsäureglyceride werden als Fette bzw. Öle bezeichnet. Ein Beispiel für einen natürlichen fettbasierten Alkohol nach oben genannter Definition ist Ricinusöl.

Als fettbasierter Alkohol (i) kommen beispielsweise pflanzliche Öle oder deren Derivate in Betracht, sofern diese die oben genannten Bedingungen bezüglich OH-Zahl und OH-Funktionalität erfüllen. Pflanzliche Öle können in ihrer Zusammensetzung schwanken und in unterschiedlichen Reinheitsgraden vorkommen. Bevorzugt im Sinne dieser Erfindung sind pflanzliche Öle, die den Bestimmungen des Deutschen Arzneibuches (DAB) genügen. Ganz besonders bevorzugt enthält die Komponente a1) mindestens ein fettbasiertes Polyol, das ein pflanzliches Öl ist, welches DAB-10 entspricht.

Als fettbasierter Alkohol (i) können außerdem allgemein bekannte Fettsäuren, bevorzugt natürliche Fettsäuren, besonders bevorzugt pflanzliche Fettsäuren, insbesondere ungesättigte pflanzliche Fettsäuren, als auch deren Derivate wie die Ester mit Alkoholen, vorzugsweise Mono- Di- oder Trialkoholen, verwendet werden, sofern die weiteren Eigenschaften hinsichtlich Molekulargewicht und OH-Funktionalität erfüllt sind.

Als fettbasierter Alkohol (i) können beispielsweise auch ringgeöffnete epoxidierte oder oxidierte Fettsäureverbindungen eingesetzt werden. Bevorzugt sind hydroxylierte Fettsäuren und/oder hydroxylierte Fettsäurederivate, die durch die vorgenannten Verfahren erhältlich sind, besonders bevorzugt wird als fettbasierter Alkohol Ricinusöl oder Derivate der Ricinolsäure eingesetzt. Solche fettbasierten Alkohole sind dem Fachmann an sich bekannt oder können nach an sich bekannten Methoden erhalten werden.

Ricinusöl ist ein Nachwachsender Rohstoff und wird aus den Samen der Ricinusstaude gewonnen. Im Wesentlichen ist Ricinusöl ein Triglycerid einer Fettsäuremischung, enthaltend, bezogen auf das Gesamtgewicht der Fettsäuremischung, > 75 Gew.-% Ricinolsäure, 3 bis 10 Gew.- % Ölsäure, 2 bis 6 Gew.-% Linolsäure, 1 bis 4 Gew.-% Stearinsäure, 0 bis 2 Gew.-% Palmitinsäure sowie gegebenenfalls geringe Mengen von jeweils weniger als 1 Gew.-% weiterer Fettsäuren, wie Linolensäure, Vaccensäure, Archinsäure, und Eicosensäure. Alternativ kann ein Teil von Ricinusöl auch durch Ricinolsäure ersetzt werden. Dabei beträgt der Anteil von Ricinolsäure vorzugsweise nicht mehr als 40 Gew.-%, besonders bevorzugt 20 Gew.-%, mehr bevorzugt 10 Gew.-% und insbesondere 5 Gew.-%, jeweils bezogen auf das Gesamtgewicht der Komponente (i). Der Anteil der Komponente (i) an dem Gesamtgewicht der zu alkoxylierenden Mischung beträgt vorzugsweise 10 bis 90 Gew.-%, mehr bevorzugt 20 bis 80 Gew.-%, besonders bevorzugt 30 bis 70 Gew.-% und insbesondere 40 bis 60 Gew.-%, jeweils bezogen auf das Gesamtgewicht der Komponenten (i) und (ii).

Als OH-funktionelle Verbindung mit aliphatisch gebundenen OH-Gruppen und einer OH-Funktionalität von 2 bis 4 (ii) kommen Verbindungen in Betracht, die 2, 3 oder 4 OH-Gruppen aufweisen und nicht unter die Definition der fettbasierten Alkohole (i) fallen. Diese Verbindungen (ii) weisen vorzugsweise keine aromatischen Gruppen auf. Beispiele sind Wasser, Propylenglykol, Ethylenglykol, Diethylenglykol, Dipropylenglykol, Neopentylglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Pentaerythritol, 1,2,4- oder 1,3,5-Trihydroxy-cyclohexan sowie Umsetzungsprodukte solcher Verbindungen mit Alkylenoxiden wie Propylenoxid oder Ethylenoxid sowie Mischungen hieraus.

Weiter kann die Komponente (ii) auch OH-Gruppen enthaltende Ester und/oder Polyester enthalten. Ester und Polyester werden vorzugsweise erhalten aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure und insbesondere Adipinsäure. Beispiele für zwei und mehrwertige Alkohole, insbesondere Diole sind Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure. Die Herstellung des Esters bzw. Polyesters erfolgt auf bekannte Art und Weise.

Dabei weist die Komponente (ii) vorzugsweise eine OH-Zahl von mindestens 50 mg KOH/g, besonders bevorzugt mindestens 200 mg KOH/g und insbesondere mindestens 600 mg KOH/g auf. Besonders bevorzugt weisen Verbindungen, die als aliphatisches Polyol (ii) eingesetzt werden 3 OH-Gruppen auf. Ein besonders bevorzugtes Beispiel für eine Verbindung der Komponente (ii) ist Glycerin, Trimethylolpropan oder Pentaerythritol, insbesondere Glycerin oder Trimethylolpropan. Fettbasierte Alkohole (i) gelten nicht als Verbindungen der Komponente (ii).

Der Anteil der Komponente (ii) an dem Gesamtgewicht der zu alkoxylierenden Mischung beträgt vorzugsweise 10 bis 90 Gew.-%, mehr bevorzugt 20 bis 80, besonders bevorzugt 30 bis 70 Gew.-% uns insbesondere 40 bis 60 Gew.-%, jeweils bezogen auf das Gesamtgewicht der Komponenten (i) und (ii).

Üblicherweise wird die Alkoxylierung der Mischung der Komponenten (i) und (ii) mit der entsprechenden Menge Alkylenoxid durchgeführt bis eine OH-Zahl von 300 bis 600 mg KOH/g, vorzugsweise 400 bis 550 mg KOH/g eingestellt ist. Dabei wird die OH-Zahl so eingestellt, dass die Viskosität des erhaltenen Alkoxylierungsprodukts bei 23 °C vorzugsweise kleiner als 1500 mPas, besonders bevorzugt 600 bis 1200 mPas und isbesondere von 600 bis 1000 mPas beträgt (DIN 53019).

Weiter können neben Ricinusöl weitere Triglyceride von Fettsäuren enthalten sein, wie Tran, Talg, Sojaöl, Rapsöl, Olivenöl, Sonnenblumenöl, Palmöl sowie Mischungen daraus.

Vorzugsweise enthält die zu alkoxylierende Mischung neben den Verbindungen (i) und (ii) weniger als 10 Gew.-%, besonders bevorzugt weniger als 5 Gew.-% und insbesondere weniger als 3 Gew.-%, jeweils bezogen auf das Gesamtgewicht der Verbindungen (i) und (ii), organische Verbindungen mit gegenüber Isocyanat reaktiven Gruppen, insbesondere OH-Gruppen, die nicht unter die Definition der Komponenten (i) und (ii) fallen. Ganz besonders bevorzugt werden weniger als 3 Gew.-% und insbesondere 0 Gew.-% aromatisches Di- oder Polyol eingesetzt. Dabei wird unter einem aromatischen Di- und Polyol eine Verbindung mit mindestens 2 OH-Gruppen verstanden, die mindestens eine aromatische Gruppe enthält.

Neben dem erfindungsgemäßen Alkoxylierungsprodukt kann die Polyolkomponente B weitere Polyole enthalten. Diese umfassen Polyetherole und/oder Polyesterole. Polyetherole und Polyesterole sind bekannt und beispielsweise beschrieben im "Kunststoffhandbuch, Band 7, Polyurethane", Carl Hanser Verlag, 3. Auflage 1993, Kapitel 3.1. In einer bevorzugten Ausführungsform beträgt der Anteil des Alkoxylierungsprodukts der Komponenten (i) und (ii), bezogen auf das Gesamtgewicht aller organischen Verbindungen mit gegenüber Isocyanat reaktiven Gruppen in der Polyolkomponente B, mindestens 20 Gew.-%, weiter bevorzugt mindestens 40 Gew.-%, besonders bevorzugt mindesten 80 Gew.-% und insbesondere mindestens 90 Gew.- %.

Die erfindungsgemäßen Polyolkomponente B kann weiter übliche Additive, wie Lösungsmittel, Weichmacher, Füllstoffe, wie Ruße, Kreiden und Talke, Haftvermittler, insbesondere Siliziumverbindungen, wie Trialkoxysilane, Thixothropiermittel, wie amorphe Kieselsäuren und Trockenmittel, wie Zeolithe, enthalten.

Bei der Herstellung der erfindungsgemäßen Faserverbundwerkstoffe werden in einem ersten Schritt eine Isocyanatkomponente A und eine Polyolkomponente B zu einer Reaktionsmischung vermischt. Dabei erfolgt das Vermischen vorzugsweise bei einem Isocyanatindex von 80 bis 200, besonders bevorzugt 90 bis 150, mehr bevorzugt 95 bis 120 und insbesondere 98 bis 110. im Rahmen der vorliegenden Erfindung wird unter dem Isocyanatindex wird das stöchiometrische Verhältnis an Isocyanatgruppen zu mit Isocyanat reaktiven Gruppen, multipliziert mit 100, verstanden. Die Vermischung kann mechanisch mittels eines Rührers oder einer Rührschnecke oder unter hohem Druck im sogenannten Gegenstrominjektionsverfahren durchgeführt werden.

Weiter wird im Rahmen der vorliegenden Erfindung unter einer Reaktionsmischung die Mischung der Isocyanatkomponente A und eine Polyolkomponente B bei Reaktionsumsätzen kleiner 90 %, bezogen auf die Isocyanatgruppen, bezeichnet.

In einem weiteren Schritt werden Fasern mit der Reaktionsmischung imprägniert, d. h. die Reaktionsmischung wird auf die Faser aufgetragen bzw. die Fasern werden mit der Reaktionsmischung getränkt. Dies geschieht vorzugsweise bei einer Temperatur von kleiner 80 °C, besonders bevorzugt 10 bis 60 °C, insbesondere 15 bis 40 °C durch bekannte Imprägnierverfahren, wie beispielsweise in einem offenen (US2433965, US4267007, US2006177591) oder einem geschlossenen Imprägnierbad (US5747075).

Als Fasern werden vorzugsweise Glasfasern, Carbonfasern, Polyesterfasern, Naturfasern, wie Cellulosefasern, Aramidfasern, Nylonfasern, Basaltfasern, Borfasern, Zylonfasern (Poly(p-phenylen-2,6-benzobisoxazol), Siliciumcarbidfasern, Asbestfasern, Metallfasern und Kombinationen davon, vorzugsweise werden als Fasern Glasfasern und/oder Carbonfasern eingesetzt. Vorzugsweise handelt es sich bei dem Fasermaterial um sogenannte "Endlosfasern", die die eine Länge von mehreren Metern bis zu mehreren Kilometern aufweisen und üblicherweise von Spulen abgewickelt werden. Diese können auch in Form von Glasfaserrovings oder Glasfasermatten vorliegen. Anschließend wird das mit Reaktionsmischung benetzte Fasermaterial in eine gewünschte Form gebracht und ausgehärtet. Dies kann beispielsweise im Pultrusionsverfahren durch das Einbringen des Faserstrangs in ein beheiztes Formwerkzeug geschehen. Vorzugsweise erfolgt das Formgebungsverfahren durch Wickeln des mit Reaktionsmischung imprägnierten Fasermaterials auf einen Formgebenden Gegenstand, beispielsweise eine Spule. Im sogenannten Faserwickelverfahren erfolgt das Wickeln indem die benetzten Fasern unter Spannung in veränderlichem Winkel auf die Spule abgelegt werden. Anschließend wird das Faserverbundmaterial ausgehärtet, beispielsweise bei erhöhter Temperatur von beispielsweise 100 bis 250 °C bevorzugt 120 bis 200 °C.

Die vorliegende Erfindung betrifft weiter ein Faserverbundmaterial, erhältlich nach einem erfindungsbemäßen Verfahren. Erfindungsgemäße Faserverbundwerkstoffe können beispielsweise als Karrosserieaußenteile im Fahrzeugbau, als Bootsrümpfe, Masten, beispielsweise als Strommasten oder Telegraphenmasten, als Rohre oder als Rotorblätter für Windkraftanlagen eingesetzt werden.

Ein Vorteil des erfindungsgemäßen Verfahrens besteht darin, dass sich mit dem Alkoxylierungsprodukt der Komponenten (i) und (ii) solche Verbindungen zu einem homogenen Reaktionsprodukt umsetzen lassen, die sich durch einen sehr großen Polaritätsunterschied auszeichnen und somit in reiner Form miteinander unverträglich sind. Durch die Umsetzung mit Alkylenoxid werden die miteinander unverträglichen Moleküle kompatibilisiert und es resultieren homogene Reaktionsprodukte, die sowohl Polyethereinheiten als auch Polyestereinheiten beinhalten. Bei der basenkatalysierten Alkoxylierung ist dies vermutlich auch darauf zurückzuführen, dass im Prozess neben der Ringöffnungspolymerisation zeitgleich Umesterungsreaktionen stattfinden, die die homogene Verteilung der estertragenden Molekülketten mit den ethertragenden Molekülketten gewährleistet. Somit werden Polyurethanharze mit hervorragenden Eigenschaften, sowohl bei der Verarbeitung, wie eine lange offene Zeit und eine gute Benetzbarkeit des Fasermaterials, als auch hervorragenden mechanischen Eigenschaften des Faserverbundwerkstoffs selbst, erhalten.

Im Folgenden soll die Erfindung anhand von Beispielen verdeutlicht werden.

Eingesetzte Rohstoffe:
Polyol 1: Polyetherol auf Basis von Glycerin als Startermolekül und Propylenoxid mit einer Hydroxylzahl von 805 mg KOH/g und einer Viskosität bei 25 °C von 1275 mPas
Polyol 2: Propoxyliertes Ricinusöl mit einer Hydroxylzahl von 136 mg KOH/g und einer Visko sität bei 25 °C von 852 mPas
Polyol 3: Propoxylierungsprodukt nach Polyolsynthesebeispiel 1, mit einer Hydroxylzahl von 483 mg KOH/g und einer Viskosität bei 23 °C von 775 mPas.
Iso 1: Polymer-MDI mit einer Funktionalität von ca. 2,7 und einem NCO-Gehalt von 31,5 Gew.- %, erhältlich unter dem Handelsnamen Lupranat® M20 von der BASF SE.
Wasserfänger: Zeolitischer Wasserfänger, dispergiert in Ricinusöl (50 Gew.-%)
Entschäumer: Entschäumer auf Basis von Silikon.

### Polyolsynthesebeispiele 1

### Polyolsynthesebeispiel 1 (Synthese 1):

94 kg Glycerin, 0,040 kg wässrige Imidazollösung (50 Gew.-%) und 118,0 kg Rizinusöl (FSG Qualität) wurden bei 25 °C in einen 600 L Reaktor vorgelegt. Anschließend wurde dieser mit Stickstoff inertisiert. Der Kessel wurde auf 150 °C erhitzt und 188,0 kg Propylenoxid zu dosiert. Nach einer Abreaktionszeit von 10 h wurde für 40 Minuten unter vollem Vakuum bei 100 °C evakuiert und anschließend auf 25 °C abgekühlt. Es wurden 392,0 kg Produkt erhalten.

Der erhaltene Polyetherester besaß folgende Kennwerte:
OH-Zahl: 483 mg KOH/g
Viskosität (25 °C): 775 mPas
Säurezahl: 0,03 mg KOH/g
Wassergehalt: 0,03 Gew.-%

Gemäß Tabelle 1 werden durch Vermischen der angegebenen Polyole mit Wasserfänger und Entschäumer Polyole mit gleichen Hydroxylzahlen hergestellt. Diese werden mit Iso 1 bei einem Isocyanatindex von 120 zu einer Reaktionsmischung vermischt und zu Polyurethanprüfplatten der Größe 200 X 300 X 2 mm gegossen. Dabei zeigt sich, dass bei gleichen OH-Zahlen die Härte, Biegefestigkeit, der Biege-E-Modul, die Zugfestigkeit und der Zug-E-Modul der Prüfplatte unter Einsatz des Hybridpolyols deutlich verbessert wird. Weiter ist bei Einsatz des Hybridpolyols auch die offene Zeit der Reaktionsmischung von 21,5 Minuten auf 40 Minuten annähernd verdoppelt.

**Tabelle 1:**

| | Polyolmischung | Hybridpolyol |
|---|---|---|
| Polyol 1 | 49,8 | |
| Wasserfänger | 5 | 5 |
| Entschäumer | 0,2 | 0,2 |
| Polyol 3 | | 94,8 |
| Polyol 2 | 45 | |
| | 100 | 100 |
| OHZ der Polyolkomponente | 462,09 | 464,52 |
| | | |
| Iso 1 | X | X |
| | | |
| Härte [Shore D] | 79 | 81 |
| Biegefestigkeit [MPa] | 86 | 115 |
| Biege-E-Modulus [MPa] | 1937 | 2521 |
| Dehnung [MPa] | 66 | 81 |
| Reißdehnung [%] | 9,1 | 8,5 |
| Dehnungs-E-Modul | 2210 | 3005 |
| Tg (DSC) | | |
| Offene Zeit (Geltimer) [min] | 21,5 | 40 |

## Patentansprüche

1. Verfahren zur Herstellung von Faserverbundwerkstoffen, bei dem man eine Isocyanatkomponente A und eine Polyolkomponente B zu einer Reaktionsmischung vermischt, Fasern mit der Reaktionsmischung imprägniert und die imprägnierten Fasern aushärtet, wobei die Polyolkomponente B das Alkoxylierungsprodukt einer Mischung, enthaltend mindestens einen fettbasierten Alkohol (i) und mindestens eine OH-funktionelle Verbindung mit aliphatisch gebundenen OH-Gruppen und einer OH-Funktionalität von 2 bis 4, die kein fettbasierter Alkohol ist, (ii) enthält.

2. Verfahren nach Anspruch 1, **dadurch gekennzeichnet, dass** die Alkoxylierung zur Herstellung des Alkoxylierungsprodukts einer Mischung, enthaltend mindestens einen fettbasierten Alkohol (i) und mindestens eine OH-funktionelle Verbindung mit aliphatisch gebundenen OH-Gruppen und einer OH-Funktionalität von 2 bis 4, die kein fettbasierter Alkohol ist, (ii) mit Hilfe eines nucleophilen und/oder basischen Katalysators und mindestens einem Alkylenoxid erfolgt.

3. Verfahren nach Anspruch 1 oder 2, **dadurch gekennzeichnet, dass** der Fettbasierte Alkohol (i) Ricinusöl enthält.

4. Verfahren nach einem der Ansprüche 1 bis 3, **dadurch gekennzeichnet, dass** das Alkylenoxid Propylenoxyd enthält.

5. Verfahren nach einem der Ansprüche 1 bis 4, **dadurch gekennzeichnet, dass** die OH-funktionellen Verbindung (ii) 3 OH-Gruppen aufweist.

6. Verfahren nach einem der Ansprüche 1 bis 5, **dadurch gekennzeichnet, dass** die OH-funktionellen Verbindung (ii) Glycerin und/oder Trimethylolpropan ist.

7. Verfahren nach einem der Ansprüche 1 bis 6, **dadurch gekennzeichnet, dass** die OH-Zahl des Alkoxylierungsprodukts einer Mischung aus fettbasiertem Alkohol (i) und mindestens einer OH-funktionellen Verbindung mit aliphatisch gebundenen OH-Gruppen und einer OH-Funktionalität von 2 bis 4 (ii) 300 bis 600 mg KOH/g beträgt.

8. Verfahren nach einem der Ansprüche 1 bis 7, **dadurch gekennzeichnet, dass** die Viskosität des Alkoxylierungsprodukts einer Mischung aus fettbasiertem Alkohol (i) und mindestens einer OH-funktionellen Verbindung mit aliphatisch gebundenen OH-Gruppen und einer OH-Funktionalität von 2 bis 4 (ii) kleiner als 1500 vorzugsweise 1200, besonders bevorzugt 600 bis 1000 mPas, gemessen DIN 53019 beträgt.

9. Verfahren nach einem der Ansprüche 1 bis 8, **dadurch gekennzeichnet, dass** der Anteil von fettbasiertem Alkohol (i) 10 bis 90 Gew.-% und OH-funktionellen Verbindung mit aliphatisch gebundenen OH-Gruppen und einer OH-Funktionalität von 2 bis 4 (ii) 90 bis 10 Gew.-%, jeweils bezogen auf das Gesamtgewicht der Komponenten (i) und (ii), beträgt.

10. Verfahren nach einem der Ansprüche 1 bis 9, **dadurch gekennzeichnet, dass** als Fasern Endlosfasern aus Glas oder Kohlefaser eingesetzt wird.

11. Verfahren nach einem der Ansprüche 1 bis 10, **dadurch gekennzeichnet, dass** der Anteil an Fasermaterial 30 bis 90 Gew.-%, bezogen auf das Gesamtgewicht des Faserverbundwerkstoffs, beträgt.

12. Verfahren nach einem der Ansprüche 1 bis 11, **dadurch gekennzeichnet, dass** die Isocyanatkomponente A eine Mischung aus monomerem Diphenylmethandiisocyanat und höherkernigem Diphenylmethandiisocyanat enthält.

13. Verfahren nach einem der Ansprüche 1 bis 12, **dadurch gekennzeichnet, dass** man die imprägnierten Fasern vor dem Aushärten aufwickelt.

14. Faserverbundmaterial, erhältlich nach einem Verfahren gemäß einem der Ansprüche 1 bis 13.

15. Verwendung eines Faserverbundmaterials nach Anspruch 14 als Mast bzw. als Rohr.

## Claims

1. A process for producing fiber composite materials which comprises mixing an isocyanate component A and a polyol component B to afford a reaction mixture, impregnating fibers with the reaction mixture and curing the impregnated fibers, where the polyol component B comprises the alkoxylation product of a mixture comprising at least one fat-based alcohol (i) and at least one OH-functional compound having aliphatically bonded OH groups and an OH functionality of 2 to 4 which is not a fat-based alcohol (ii).

2. The process according to claim 1, wherein the alkoxylation to produce the alkoxylation product of a mixture comprising at least one fat-based alcohol (i) and at least one OH-functional compound having aliphatically bonded OH groups and an OH functionality of 2 to 4 which is not a fat-based alcohol (ii) is carried out using a nucleophilic and/or basic catalyst and at least one alkylene oxide.

3. The process according to claim 1 or 2, wherein the fat-based alcohol (i) comprises castor oil.

4. The process according to any of claims 1 to 3, wherein the alkylene oxide comprises propylene oxide.

5. The process according to any of claims 1 to 4, wherein the OH-functional compound (ii) comprises 3 OH groups.

6. The process according to any of claims 1 to 5, wherein the OH-functional compound (ii) is glycerol and/or trimethylolpropane.

7. The process according to any of claims 1 to 6, wherein the OH number of the alkoxylation product of a mixture of fat-based alcohol (i) and at least one OH-functional compound having aliphatically bonded OH groups and an OH functionality of 2 to 4 (ii) is 300 to 600 mg KOH/g.

8. The process according to any of claims 1 to 7, wherein the viscosity of the alkoxylation product of a mixture of fat-based alcohol (i) and at least one OH-functional compound having aliphatically bonded OH groups and an OH functionality of 2 to 4 (ii) is less than 1500, preferably 1200, particularly preferably 600 to 1000 mPas, measured according to DIN 53019.

9. The process according to any of claims 1 to 8, wherein the proportion of fat-based alcohol (i) is 10% to 90% by weight and the proportion of OH-functional compound having aliphatically bonded OH groups and an OH functionality of 2 to 4 (ii) is 90% to 10% by weight, in each case based on the total weight of the components (i) and (ii).

10. The process according to any of claims 1 to 9, wherein the fibers employed are endless fibers of glass or carbon fiber.

11. The process according to any of claims 1 to 10, wherein the proportion of fiber material is 30% to 90% by weight based on the total weight of the fiber composite material.

12. The process according to any of claims 1 to 11, wherein the isocyanate component A comprises a mixture of monomeric diphenylmethane diisocyanate and higher-nuclear diphenylmethane diisocyanate.

13. The process according to any of claims 1 to 12, wherein the impregnated fibers are wound up before curing.

14. A fiber composite material obtainable by a process according to any of claims 1 to 13.

15. The use of a fiber composite material according to claim 14 as a mast/as a pipe.

## Revendications

1. Procédé pour la préparation de matériaux composites fibreux, dans lequel on mélange un composant de type isocyanate A et un composant de type polyol B pour donner un mélange réactionnel, on imprègne des fibres avec le mélange réactionnel et on durcit les fibres imprégnées, le composant de type polyol B contenant le produit d'alcoxylation d'un mélange contenant au moins un alcool (i) à base de graisse et au moins un composé (ii) fonctionnalisé par OH doté de groupes OH liés de manière aliphatique et d'une fonctionnalité d'OH de 2 à 4, qui n'est pas un alcool à base de graisse.

2. Procédé selon la revendication 1, **caractérisé en ce que** l'alcoxylation pour la préparation du produit d'alcoxylation d'un mélange contenant au moins un alcool (i) à base de graisse et au moins un composé (ii) fonctionnalisé par OH doté de groupes OH liés de manière aliphatique et d'une fonctionnalité d'OH de 2 à 4, qui n'est pas un alcool à base de graisse, est réalisée à l'aide d'un catalyseur nucléophile et/ou basique et d'au moins un oxyde d'alkylène.

3. Procédé selon la revendication 1 ou 2, **caractérisé en ce que** l'alcool (i) à base de graisse contient de l'huile de ricin.

4. Procédé selon l'une quelconque des revendications 1 à 3, **caractérisé en ce que** l'oxyde d'alkylène contient de l'oxyde de propylène.

5. Procédé selon l'une quelconque des revendications 1 à 4, **caractérisé en ce que** le composé (ii) fonctionnalisé par OH présente 3 groupes OH.

6. Procédé selon l'une quelconque des revendications 1 à 5, **caractérisé en ce que** le composé (ii) fonctionnalisé par OH est la glycérine et/ou le triméthylolpropane.

7. Procédé selon l'une quelconque des revendications 1 à 6, **caractérisé en ce que** l'indice d'OH du produit d'alcoxylation d'un alcool (i) à base de graisse et d'au moins un composé (ii) fonctionnalisé par OH doté de groupes OH liés de manière aliphatique et d'une fonctionnalité d'OH de 2 à 4 est de 300 à 600 mg de KOH/g.

8. Procédé selon l'une quelconque des revendications 1 à 7, **caractérisé en ce que** la viscosité du produit d'alcoxylation d'un mélange d'un alcool (i) à base de graisse et d'au moins un composé (ii) fonctionnalisé par OH doté de groupes OH liés de manière aliphatique et d'une fonctionnalité d'OH de 2 à 4 est inférieure à 1 500, de préférence 1 200, particulièrement préférablement 600 à 1 000 mPas, mesurée selon la norme DIN 53019.

9. Procédé selon l'une quelconque des revendications 1 à 8, **caractérisé en ce que** la proportion d'alcool (i) à base de graisse est de 10 à 90 % en poids et la proportion de composé (ii) fonctionnalisé par OH doté de groupes OH liés de manière aliphatique et d'une fonctionnalité d'OH de 2 à 4 est de 90 à 10 % en poids, à chaque fois par rapport au poids total des composants (i) et (ii).

10. Procédé selon l'une quelconque des revendications 1 à 9, **caractérisé en ce que** des fibres sans fin de verre ou des fibres de carbone sont utilisées en tant que fibres.

11. Procédé selon l'une quelconque des revendications 1 à 10, **caractérisé en ce que** la proportion de matériau fibreux est de 30 à 90 % en poids, par rapport au poids total du matériau composite fibreux.

12. Procédé selon l'une quelconque des revendications 1 à 11, **caractérisé en ce que** le composant de type isocyanate A contient un mélange de diisocyanate de diphénylméthane monomérique et de diisocyanate de diphénylméthane à plusieurs noyaux.

13. Procédé selon l'une quelconque des revendications 1 à 12, **caractérisé en ce qu'**on enroule les fibres imprégnées avant le durcissement.

14. Matériau composite fibreux, qui peut être obtenu par un procédé selon l'une quelconque des revendications 1 à 13.

15. Utilisation d'un matériau composite fibreux selon la revendication 14 en tant que mât ou en tant que tube.
